# DEMANDE DE BREVET EUROPEEN

(11) **EP 3 843 324 A1**
(43) Date de publication de la demande: **30.06.2021**
(21) Numéro de dépôt: 20216337.4
(22) Date de dépôt: 22.12.2020
(51) Int. Cl.: H04L 9/16, H04L 9/30, H04L 9/32

(54) **PROCÉDÉ DE SÉCURISATION DU SOLDE D'UN COMPTE ÉLECTRONIQUE**

(30) Priorité: 23.12.2019 FR 1915433
(71) Demandeur: THALES, 92400 Courbevoie (FR)
(72) Inventeur: DUBOIS, Renaud, 92622 GENNEVILLIERS CEDEX (FR); DUPIN, Aurélien, 92622 GENNEVILLIERS CEDEX (FR); PRAT, Julien, 92622 GENNEVILLIERS CEDEX (FR); RICOSSET, Thomas, 92622 GENNEVILLIERS CEDEX (FR)
(74) Mandataire: Lavoix

(57) **Abrégé**

La présente invention concerne un procédé de sécurisation du solde d'un compte électronique de première génération d'un réseau monétaire, le compte électronique de première génération étant associé à une signature cryptographique de première génération obtenue à partir d'un protocole cryptographique de première génération, le réseau monétaire étant associé à une chaîne de blocs d'informations, le procédé comprenant les étapes de :
- génération d'un compte électronique de deuxième génération associé à une signature cryptographique de deuxième génération à partir d'un protocole cryptographique de deuxième génération, le protocole cryptographique de deuxième génération ayant été conçu en fonction d'au moins un algorithme quantique, et
- réalisation d'une transaction d'un montant du solde du compte de première génération vers le compte de deuxième génération, la réalisation de la transaction comprenant l'enregistrement de la transaction dans la chaîne de blocs d'informations du réseau monétaire.

## Description

La présente invention concerne un procédé de sécurisation du solde d'un compte électronique. La présente invention concerne aussi une installation électronique configurée pour mettre en œuvre un tel procédé de sécurisation.

Des mécanismes cryptographiques de signature électronique sont utilisés dans de nombreuses applications, notamment pour sécuriser la transmission de messages ou la réalisation de transactions monétaires. De tels mécanismes cryptographiques reposent sur des problèmes mathématiques réputés difficiles à résoudre.

Toutefois, une percée technologique ou mathématique remettant en cause la difficulté de tels problèmes rendrait vulnérables toutes les communications, et paralyserait, par exemple, le commerce électronique. En particulier, l'avènement de l'ordinateur quantique permettra de casser les mécanismes de signatures cryptographiques classiquement utilisés.

Des alternatives de signatures électroniques post-quantiques existent et sont en cours d'étude. A terme, en vue de faire face aux attaques quantiques, les signatures cryptographiques actuelles seront remplacées par des signatures basées sur des algorithmes post-quantiques.

Néanmoins, si la menace quantique se concrétise avant la transition post-quantique, les liquidités présentes sur les comptes électroniques de réseaux monétaires basés sur des signatures cryptographiques classiques seraient alors susceptibles d'être volées, sans possibilité de dédommager le détenteur des liquidités volées.

Il existe donc un besoin pour un procédé visant à sécuriser les liquidités présentes sur les comptes électroniques de réseaux monétaires, notamment dans le cas d'une attaque quantique.

A cet effet, la présente description a pour objet un procédé de sécurisation du solde d'un compte électronique de première génération appartenant à un ensemble de comptes électroniques de première génération d'un réseau monétaire, chaque compte électronique de première génération étant associé à une signature cryptographique de première génération obtenue à partir d'un protocole cryptographique de première génération, le réseau monétaire étant associé à une chaîne de blocs d'informations, le procédé étant mis en œuvre par une installation électronique et comprenant les étapes de :
- génération, suite à la réception d'une première commande du détenteur du compte de première génération, d'un compte électronique de deuxième génération associé à une signature cryptographique de deuxième génération à partir d'un protocole cryptographique de deuxième génération, le protocole cryptographique de deuxième génération étant différent du protocole cryptographique de première génération et ayant été conçu en fonction d'au moins un algorithme quantique, et
- réalisation, suite à la réception d'une deuxième commande du détenteur du compte de première génération, d'une transaction d'un montant du solde du compte de première génération vers le compte de deuxième génération, la réalisation de la transaction comprenant l'enregistrement de la transaction dans la chaîne de blocs d'informations du réseau monétaire, l'enregistrement de la transaction liant le compte de première génération du détenteur au compte de deuxième génération du détenteur.

Suivant des modes de mise en œuvre particuliers, le procédé de sécurisation comprend une ou plusieurs des caractéristiques suivantes, prise(s) isolément ou suivant toutes les combinaisons techniquement possibles :
- le protocole cryptographique de première génération est un protocole se basant sur au moins un problème choisi parmi : le problème du logarithme discret, le problème de la factorisation d'entiers, le problème décisionnel Diffie-Hellman et le problème décisionnel bilinéaire Diffie-Hellman.
- le protocole cryptographique de première génération est choisi dans le groupe constitué de : un protocole de signature électronique sur courbe elliptique, un protocole de chiffrement RSA et un protocole de chiffrement DSA ;
- le protocole de deuxième génération est un protocole post-quantique ;
- la signature cryptographique de deuxième génération de chaque compte de deuxième génération est propre à résister à une attaque quantique fondée sur un algorithme de Shor et/ou un algorithme de Grover et/ou un algorithme de Simon ;
- l'étape de réalisation de la transaction comprend :
   - la génération d'une demande de transaction chiffrée en fonction de la signature cryptographique de première génération,
   - la vérification de la validité de la signature cryptographique de première génération associée à la demande de transaction chiffrée,
   - la validation de la demande de transaction par un mécanisme de validation lorsque la signature cryptographique de première génération a été validée, la transaction étant enregistrée dans la chaîne de blocs une fois la demande de transaction validée, et
   - le crédit du compte de deuxième génération du montant de la transaction et le débit du compte de première génération du montant de la transaction et, le cas échéant, de frais de transaction ;
- le réseau monétaire est le réseau d'une cryptomonnaie ;
- le procédé comprend une étape de restitution de solde comprenant le crédit, sur chaque compte de deuxième génération lié à un compte de première génération, du solde présent sur le compte de première génération à une date prédéfinie ;
- l'étape de restitution est déclenchée suite à une mise à jour du réseau monétaire au cours de laquelle chaque compte de première génération lié à un compte de deuxième génération est remplacé par ledit compte de deuxième génération, ou suite à une attaque quantique des signatures cryptographiques de première génération des comptes électroniques de première génération du réseau monétaire.

La présente description se rapporte aussi à une installation électronique configurée pour mettre en œuvre un procédé de sécurisation tel que décrit précédemment.

D'autres caractéristiques et avantages de l'invention apparaîtront à la lecture de la description qui suit de modes de réalisation de l'invention, donnés à titre d'exemple uniquement et en référence aux dessins qui sont :
- [Fig 1], la figure 1, une vue schématique d'un exemple d'une installation électronique, et
- [Fig 2], la figure 2, un organigramme d'un exemple de mise en œuvre d'un procédé de sécurisation.

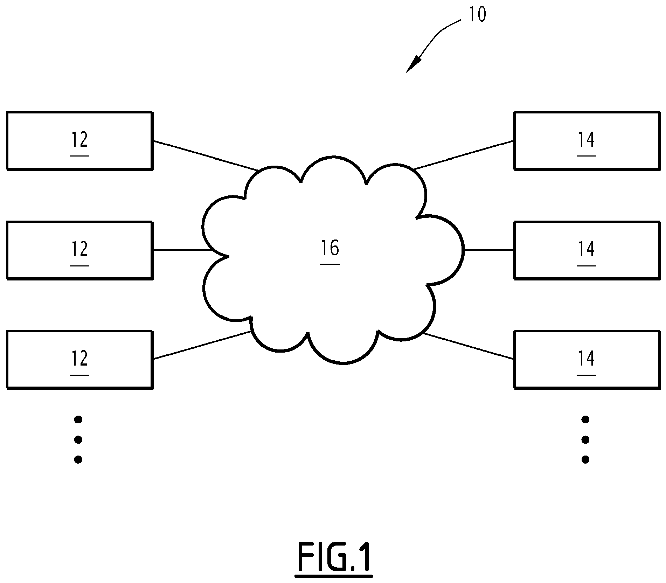

Une installation électronique 10 est illustrée par la figure 1.

L'installation électronique 10 est mise en œuvre dans un réseau monétaire. L'installation électronique 10 permet notamment la réalisation de transactions (échanges monétaires) sécurisées sur le réseau monétaire.

Le réseau monétaire est avantageusement un réseau décentralisé, c'est-à-dire sans organe de contrôle centralisé. Par exemple, le réseau monétaire est le réseau d'une cryptomonnaie (aussi appelée « cybermonnaie »). La cryptomonnaie est, par exemple, la cryptomonnaie Bitcoin, la cryptomonnaie Ether ou encore la cryptomonnaie XRP.

Le réseau monétaire gère un ensemble de comptes électroniques détenus par des utilisateurs du réseau monétaire.

Les comptes électroniques du réseau monétaire sont des comptes dits de première génération ou pré-quantiques. Chaque compte comprend un solde correspondant aux liquidités présentes sur le compte. Le solde d'un compte évolue à chaque transaction (débit ou crédit) impliquant ledit compte.

Chaque compte électronique de première génération est associé à une signature électronique cryptographique de première génération obtenue à partir d'un protocole cryptographique de première génération.

La signature cryptographique de première génération comprend, par exemple, une clé privée (destinée à être conservée secrète par le détenteur du compte) et une clé publique (destinée à être communiquée au public).

Optionnellement, chaque compte électronique de première génération est aussi associé à un identifiant spécifique. Dans le cas où le compte électronique ne comprend pas un identifiant spécifique, la clé publique du compte fait, par exemple, office d'identifiant.

Avantageusement, le protocole cryptographique de première génération est un protocole pré-quantique, c'est-à-dire qui ne résisterait pas à une attaque menée par un ordinateur quantique.

Avantageusement, le protocole cryptographique de première génération est un protocole reposant sur un problème mathématique complexe, difficile à résoudre. Par exemple, le protocole cryptographique de première génération se base sur au moins l'un des problèmes suivants parmi : le problème du logarithme discret (abrégé en problème DLOG), le problème de la factorisation d'entiers (abrégé en problème FACT), le problème décisionnel Diffie-Hellman (abrégé en problème DDH) et le problème décisionnel bilinéaire Diffie-Hellman (abrégé en problème DBDH).

Avantageusement, le protocole cryptographique de première génération est choisi dans le groupe constitué de : un protocole de signature électronique sur courbe elliptique (abrégé en ECDSA, et équivalent à la dénomination protocole de signature à courbe elliptique), un protocole de chiffrement RSA et un protocole de chiffrement DSA.

Le réseau monétaire est associé à une chaîne de blocs d'informations (en anglais « Blockchain »). La chaîne de blocs d'informations forme une base de données comprenant l'historique des transactions entre des comptes d'utilisateurs du réseau monétaire. Les transactions passées sont donc horodatées dans la chaîne de blocs d'informations. La chaîne de blocs d'informations est partagée entre les différents acteurs du réseau monétaire, ce qui permet à chacun de vérifier la validité de la chaîne.

La chaîne de blocs comprend un premier bloc et un ou plusieurs blocs successifs. Chaque bloc autre que le premier bloc est relié à un unique bloc précédent. Chaque bloc est associé à au moins une transaction identifiée par un haché (en anglais « hash »).

Dans l'exemple illustré par la figure 1, l'installation électronique 10 comprend une pluralité d'entités utilisateur 12 et une pluralité d'entités de validation 14. Chacune des entités utilisateur 12 et des entités de validation 14 a accès, via un réseau informatique 16, à la chaîne de blocs d'informations du réseau monétaire. Le réseau informatique 16 est, par exemple, le réseau Internet.

Les entités utilisateur 12 sont configurées pour effectuer des transactions sur le réseau monétaire via des comptes de première génération.

Les entités de validation 14 sont configurées pour valider et enregistrer les transactions dans la chaîne de blocs d'informations du réseau monétaire.

Chaque entité utilisateur 12 et chaque entité de validation 14 comprend un calculateur, qui est, par exemple, un ordinateur.

Plus généralement, chaque calculateur est un calculateur électronique propre à manipuler et/ou transformer des données représentées comme des quantités électroniques ou physiques dans des registres de calculateur et/ou des mémoires en d'autres données similaires correspondant à des données physiques dans des mémoires, des registres ou d'autres types de dispositifs d'affichage, de transmission ou de mémorisation.

Chaque calculateur est, par exemple, en interaction avec un produit programme d'ordinateur.

Par exemple, chaque calculateur comporte un processeur comprenant une unité de traitement de données, des mémoires et, le cas échéant, un lecteur de support d'informations. Chaque calculateur comprend éventuellement une interface homme-machine comprenant un clavier et une unité d'affichage.

Le produit programme d'ordinateur en interaction avec chaque calculateur comporte un support d'informations.

Le support d'information est un support lisible par le calculateur, usuellement par l'unité de traitement de données. Le support lisible d'informations est un médium adapté à mémoriser des instructions électroniques et capable d'être couplé à un bus d'un système informatique.

A titre d'exemple, le support d'informations est une clé USB, une disquette ou disque souple (de la dénomination anglaise « *Floppy disc* »), un disque optique, un CD-ROM, un disque magnéto-optique, une mémoire ROM, une mémoire RAM, une mémoire EPROM, une mémoire EEPROM, une carte magnétique ou une carte optique.

Sur le support d'informations est mémorisé le programme d'ordinateur correspondant comprenant des instructions de programme.

Le programme d'ordinateur est chargeable sur l'unité de traitement de données du calculateur correspondant et est adapté pour entraîner la mise en œuvre d'au moins une étape d'un procédé de sécurisation lorsque le programme d'ordinateur est mis en œuvre sur l'unité de traitement du calculateur correspondant.

Les programmes d'ordinateur associés aux entités utilisateur 12 et les programmes d'ordinateur associés aux entités de validation 14 sont propres à mettre en œuvre des étapes différentes du procédé de sécurisation qui seront décrites dans la suite de la description.

Avantageusement, chaque entité de validation 14 est aussi propre à fonctionner en tant qu'entité utilisateur 12 et chaque entité utilisateur 12 est aussi propre à fonctionner en tant qu'entité de validation 14. Dans ce cas, les programmes d'ordinateur associés à chaque entité sont tels que l'entité est propre à fonctionner selon ces deux modes de fonctionnement.

En variante, chaque ou au moins un calculateur est de type hardware (traduit en français par *matériel*), tel qu'un circuit logique programmable (abrégé par FPGA ce qui signifie en anglais *Field Programmable Gate Array*), ou encore un circuit intégré dédié, tel qu'un ASIC (de l'anglais *Application-Specific Integrated Circuit*).

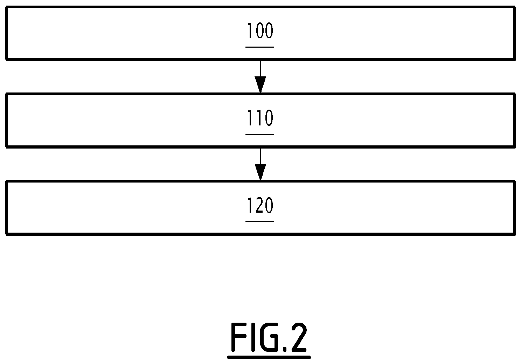

Le fonctionnement de l'installation électronique 10 va maintenant être décrit en référence à la figure 2, qui illustre schématiquement un exemple de mise en œuvre d'un procédé de sécurisation d'un compte électronique d'un réseau monétaire.

Le procédé de sécurisation comprend une étape 100 de génération, suite à la réception d'une première commande du détenteur d'un compte de première génération, d'un compte électronique de deuxième génération ou post-quantique.

Le compte de deuxième génération est associé à une signature électronique cryptographique de deuxième génération obtenue à partir d'un protocole cryptographique de deuxième génération.

Le protocole cryptographique de deuxième génération est différent du protocole cryptographique de première génération.

Le protocole cryptographique de deuxième génération a été conçu en fonction d'au moins un algorithme quantique. Un algorithme quantique utilise l'intrication quantique pour solutionner des problèmes en temps linéaire là où le temps était exponentiel avec un algorithme non-quantique (pré-quantique).

Préférentiellement, le protocole cryptographique de deuxième génération a été conçu en fonction d'une problématique d'attaque quantique. Une attaque quantique est une attaque menée par un ordinateur quantique sur la base d'un algorithme quantique, tel qu'un algorithme de Shor, de Grover ou de Simon.

Avantageusement, le protocole cryptographique de deuxième génération est un protocole post-quantique, c'est-à-dire un protocole conçu pour résister à une attaque par un ordinateur quantique. Un protocole cryptographique post-quantique est un algorithme qui repose sur un problème reconnu difficile même pour un ordinateur quantique.

Avantageusement, le protocole cryptographique de deuxième génération n'est pas basé sur les problèmes suivants : le problème du logarithme discret (DLOG), le problème de la factorisation d'entiers (FACT), le problème décisionnel Diffie-Hellman (DDH) et le problème décisionnel bilinéaire Diffie-Hellman (DBDH).

Dans un exemple, le protocole cryptographique de deuxième génération se base sur l'un des problèmes suivants : le problème des vecteurs courts dans les réseaux euclidiens, le problème de décodage de codes linéaires aléatoires, le problème d'inversion de polynômes multivariés, le problème de navigation dans les isogénies des courbes elliptiques supersingulières et le problème d'inversion de fonctions de hachage.

Dans un exemple, le protocole cryptographique de deuxième génération est celui décrit par les auteurs Bos, Costello, Naehrig et Stebila dans le document intitulé « *Post-quantum key exchange for the TLS protocol from the ring learning with errors problem »* issue d'un proceedings de la conférence IEEE Symposium on Security and Privacy (S&P) 2015. Un tel protocole cryptographique post-quantique implique une constante A, dont il faut pouvoir prouver que la génération n'a pas été dictée par des intentions malicieuses. Ce protocole est également un protocole d'échange de clés.

Dans un autre exemple, le protocole cryptographique de deuxième génération est un algorithme, appelé FALCON, qui se base sur l'utilisation de réseau euclidien de type NTRU et un problème difficile dit SIS qui est une extension au cas moyen du problème SVP.

Avantageusement, la signature cryptographique de deuxième génération de chaque compte de deuxième génération est propre à résister à une attaque quantique fondée sur un algorithme de Shor et/ou un algorithme de Grover et/ou un algorithme de Simon. Par le terme « résister », il est entendu résister à une attaque en 2ⁿ opérations, n variant suivant le niveau de sécurité. Par exemple, l'exposant « n » est égal à 128 ou à 256 suivant le niveau de difficulté.

Par exemple, la signature cryptographique de deuxième génération comprend une clé privée et une clé publique.

Optionnellement, chaque compte électronique de deuxième génération est aussi associé à un identifiant. Dans le cas où le compte électronique ne comprend pas un identifiant spécifique, la clé publique du compte fait, par exemple, office d'identifiant.

L'étape de génération 100 est, par exemple, mise en œuvre par une entité utilisateur 12 de l'installation 10, généralement par l'entité utilisateur 12 appartenant au détenteur du compte de première génération à l'origine de la première commande.

Le procédé de sécurisation comprend une étape 110 de réalisation, suite à la réception d'une deuxième commande du détenteur du compte de première génération, d'une transaction d'un montant du solde du compte de première génération vers le compte de deuxième génération. A l'issue de la transaction, la transaction est enregistrée dans la chaîne de blocs d'informations du réseau monétaire. L'étape 110 permet, ainsi, d'établir un lien public entre le compte de première génération du détenteur et le compte de deuxième génération généré lors de l'étape précédente 100.

Dans un exemple, l'étape de réalisation 110 comprend une sous-étape 110A de génération d'une demande de transaction chiffrée en fonction de la signature cryptographique de première génération. Par exemple, la demande de transaction est chiffrée au moyen de la clé privée de la signature cryptographique. Le corps de la demande de transaction comprend notamment :
- le montant de la transaction,
- la clé publique du compte de première génération et/ou l'identifiant du compte de première génération, et
- la clé publique du compte de deuxième génération et/ou l'identifiant du compte de deuxième génération destinataire.

La sous-étape 110A est, par exemple, mise en œuvre par une entité utilisateur 12 de l'installation 10, généralement par l'entité utilisateur 12 ayant effectué l'étape de génération 100.

L'étape de réalisation 110 comprend une sous-étape 110B de vérification de la validité de la signature cryptographique de première génération associée à la demande de transaction chiffrée. Typiquement, la demande de transaction est lue au moyen de la clé publique de la signature cryptographique, ce qui permet d'authentifier que la demande de transaction est bien effectuée par le détenteur du compte de première génération (authentification).

La sous-étape 110B est, par exemple, mise en œuvre par des entités de vérification 14 de l'installation 10.

L'étape de réalisation 110 comprend une sous-étape 110C de validation de la demande de transaction par un mécanisme de validation lorsque la signature cryptographique de première génération a été validée.

Le mécanisme de validation est, par exemple, un mécanisme de validation de type preuve de travail (en anglais « proof-of-work ») ou preuve d'enjeu (en anglais « proof-of-stake »).

La sous-étape 110C est, par exemple, mise en œuvre par des entités de vérification 14 de l'installation 10.

L'étape de réalisation 110 comprend une sous-étape 110D d'enregistrement de la transaction dans la chaîne de blocs une fois la demande de transaction validée. La transaction est notamment enregistrée dans un nouveau bloc de la chaîne de blocs d'informations. L'enregistrement de la transaction lie, ainsi, le compte de première génération du détenteur au compte de deuxième génération du détenteur.

La sous-étape 110D est, par exemple, mise en œuvre par des entités de vérification 14 de l'installation 10.

L'étape de réalisation 110 comprend une sous-étape 110E de crédit du compte de deuxième génération du montant de la transaction et de débit du compte de première génération du montant de la transaction et, le cas échéant, de frais de transaction. Les frais de transaction dépendent du réseau monétaire.

La sous-étape 110E est, par exemple, mise en œuvre par des entités de vérification 14 de l'installation 10.

Le procédé comprend optionnellement une étape 120 de restitution de solde en fonction de la chaîne de blocs d'informations.

L'étape de restitution 120 comprend le crédit, sur chaque compte de deuxième génération lié à un compte de première génération, du solde présent sur le compte de première génération à une date prédéfinie.

L'étape de restitution 120 est, par exemple, déclenchée suite à une mise à jour du réseau monétaire au cours de laquelle chaque compte de première génération lié à un compte de deuxième génération est remplacé par ledit compte de deuxième génération.

En variante, l'étape de restitution 120 est déclenchée suite à une attaque quantique des signatures cryptographiques de première génération des comptes électroniques de première génération du réseau monétaire. L'étape de restitution 120 permet alors de restituer au détenteur d'un compte de première génération l'intégralité du montant de son solde avant l'attaque.

Ainsi, le procédé de sécurisation permet de sécuriser les liquidités présentes sur les comptes électroniques de réseaux monétaires, notamment dans le cas d'une attaque quantique. En effet, chaque lien établi entre un compte de première génération et un compte de deuxième génération permet de restituer le solde du compte de première génération à une date définie sur le compte de deuxième génération. Sans un tel lien, une telle restitution n'aurait pas été possible dans le cas d'un réseau monétaire associé à une chaîne de blocs d'informations, puisqu'aucune autre information sur l'identité du détenteur du compte n'est enregistrée dans ce type de réseau monétaire.

Un tel procédé permet, en outre, de faciliter un changement de version des comptes de première génération vers des comptes de deuxième génération. Cela permet, lors du changement de version, de créditer automatiquement tous les détenteurs de comptes de deuxième génération d'un montant égal au montant correspondant inscrit dans la chaîne de blocs d'informations à une date définie.

De plus, un tel procédé demande un effort minimal pour être mis en place, à savoir les frais d'une transaction plus un faible nombre d'unité monétaire.

Un tel procédé permet également de conserver le paradigme de décentralisation de la chaîne de blocs d'informations.

Un tel procédé permet donc d'anticiper la menace quantique en proposant une solution qu'il est possible de mettre en place dès aujourd'hui sans intervenir sur la spécification de la chaîne de blocs d'informations avant un éventuel changement de version et en sauvegardant les liquidités si le changement de version est adopté. En outre, un tel procédé limite au maximum l'impact sur l'interface de programmation existante de la chaîne de blocs d'informations considérée.

Plus généralement, un tel procédé permet d'assurer la transition de toute infrastructure à clés publiques (en anglais Public Key Infrastructures) de manière autonome d'une autorité de certification en utilisant le mécanisme décrit et l'horodatage d'une blockchain.

L'homme du métier comprendra que les modes de réalisation précédemment décrits peuvent être combinés pour former de nouveaux modes de réalisation pourvu qu'ils soient compatibles techniquement.

## Revendications

1. Procédé de sécurisation du solde d'un compte électronique de première génération appartenant à un ensemble de comptes électroniques de première génération d'un réseau monétaire, chaque compte électronique de première génération étant associé à une signature cryptographique de première génération obtenue à partir d'un protocole cryptographique de première génération, le réseau monétaire étant associé à une chaîne de blocs d'informations, le procédé étant mis en œuvre par une installation électronique (10) et comprenant les étapes de :
a. génération, suite à la réception d'une première commande du détenteur du compte de première génération, d'un compte électronique de deuxième génération associé à une signature cryptographique de deuxième génération à partir d'un protocole cryptographique de deuxième génération, le protocole cryptographique de deuxième génération étant différent du protocole cryptographique de première génération et ayant été conçu en fonction d'au moins un algorithme quantique, et
b. réalisation, suite à la réception d'une deuxième commande du détenteur du compte de première génération, d'une transaction d'un montant du solde du compte de première génération vers le compte de deuxième génération, la réalisation de la transaction comprenant l'enregistrement de la transaction dans la chaîne de blocs d'informations du réseau monétaire, l'enregistrement de la transaction liant le compte de première génération du détenteur au compte de deuxième génération du détenteur.

2. Procédé selon la revendication 1, dans lequel le protocole cryptographique de première génération est un protocole se basant sur au moins un problème choisi parmi : le problème du logarithme discret, le problème de la factorisation d'entiers, le problème décisionnel Diffie-Hellman et le problème décisionnel bilinéaire Diffie-Hellman.

3. Procédé selon la revendication 1 ou 2, dans lequel le protocole cryptographique de première génération est choisi dans le groupe constitué de : un protocole de signature électronique sur courbe elliptique, un protocole de chiffrement RSA et un protocole de chiffrement DSA.

4. Procédé selon l'une quelconque des revendications 1 à 3, dans lequel le protocole de deuxième génération est un protocole post-quantique.

5. Procédé selon l'une quelconque des revendications 1 à 4, dans lequel la signature cryptographique de deuxième génération de chaque compte de deuxième génération est propre à résister à une attaque quantique fondée sur un algorithme de Shor et/ou un algorithme de Grover et/ou un algorithme de Simon.

6. Procédé selon l'une quelconque des revendications 1 à 5, dans lequel l'étape de réalisation de la transaction comprend :
i. la génération d'une demande de transaction chiffrée en fonction de la signature cryptographique de première génération,
ii. la vérification de la validité de la signature cryptographique de première génération associée à la demande de transaction chiffrée,
iii. la validation de la demande de transaction par un mécanisme de validation lorsque la signature cryptographique de première génération a été validée, la transaction étant enregistrée dans la chaîne de blocs une fois la demande de transaction validée, et
iv. le crédit du compte de deuxième génération du montant de la transaction et le débit du compte de première génération du montant de la transaction et, le cas échéant, de frais de transaction.

7. Procédé selon l'une quelconque des revendications 1 à 6, dans lequel le réseau monétaire est le réseau d'une cryptomonnaie.

8. Procédé selon l'une quelconque des revendications 1 à 7, dans lequel le procédé comprend une étape de restitution de solde comprenant le crédit, sur chaque compte de deuxième génération lié à un compte de première génération, du solde présent sur le compte de première génération à une date prédéfinie.

9. Procédé selon la revendication 8, dans lequel l'étape de restitution est déclenchée suite à une mise à jour du réseau monétaire au cours de laquelle chaque compte de première génération lié à un compte de deuxième génération est remplacé par ledit compte de deuxième génération, ou suite à une attaque quantique des signatures cryptographiques de première génération des comptes électroniques de première génération du réseau monétaire.

10. Installation électronique (10) configurée pour mettre en œuvre un procédé de sécurisation selon l'une quelconque des revendications 1 à 9.
